# EUROPÄISCHE PATENTSCHRIFT

(11) **EP 1 356 894 B1**
(45) Veröffentlichungstag und Bekanntmachung des Hinweises auf die Patenterteilung: **25.05.2005**
(21) Anmeldenummer: 03090087.2
(22) Anmeldetag: 27.03.2003
(51) Int. Cl.: B23Q 17/00, B23Q 1/00, B23Q 7/14

(54) **Intelligente Werkstück-Spannvorrichtung**
Intelligent clamping device for workpieces
Dispositif intelligente de serrage de pièces

(30) Priorität: 24.04.2002 DE 10218188
(43) Veröffentlichungstag der Anmeldung: 29.10.2003
(73) Patentinhaber: HOHENSTEIN Vorrichtungsbau und Spannsysteme GmbH, 09337 Hohenstein-Ernstthal (DE)
(72) Erfinder: Franzki, Michael, 78166 Donaueschingen (DE)
(74) Vertreter: Grosse, Ulrich

(56) Entgegenhaltungen:
- EP-A- 0 294 547
- DE-A- 19 818 070
- DE-U- 29 903 693
- DE-U- 29 922 068
- GB-A- 2 123 722

## Beschreibung

Die Erfindung geht von dem im Oberbegriff des Patentanspruches 1 definierten Gegenstandes aus.

Die auf spanenden Werkzeugmaschinen, insbesondere Bohr-Fräs-Bearbeitungszentren, zum Einsatz kommenden Spannvorrichtungen bestehen im wesentlichen aus einem Aufspannkörper, an dessen Peripherieflächen Werkstückträger- und Spann-Module sowie Komponenten für die wiederholgenaue Lagebestimmung und die Spannung der Werkstücke angeordnet sind
Die Werkstückträger- und Spann-Module können wahlweise fest, schwenkbeweglich oder auswechselbar am Aufspannkörper arretiert, gelagert und justiert sein. Die Arretierung, Schwenkbeweglichkeit der Module sowie Komponenten und die Werkstückspannung erfolgt durch mechanische oder mit Leistungsmedien, wie Drucköl und Druckluft, betätigte Antriebe..
Die Spannvorrichtung bildet über die Maschinenpalette, auf der sie austauschbar positioniert und arretiert ist, mit dem Bohr-Fräs-Bearbeitungszentrum mechanische und Leistungsmedien-Schnittstellen. Das insbesondere für die gleichzeitige Werkstückspannung mehrerer Werkstücke eingesetzte Leistungsmedium, beispielsweise Drucköl oder Druckluft, wird über diese Schnittstelle von im Bohr-Fräs-Bearbeitungszentrum angeordneten Pumpaggregat über Leitungs- und Ventilsysteme in die Spannvorrichtung geleitet, um die Werkstücke mittels Schwenkspannelementen oder anderen Komponenten lage- und wiederholgenau auf dem Modul am Aufspannkörper zu positionieren, zu spannen und entspannen.

Bekannt sind intelligente Ausbildungen von druckölbetätigten Werkstück-Spannvorrichtungen, wobei aus Druckanstiegen oder leckölbedingten Druckabfällen gegenüber normativen Druckdimensionierungen mittels Ventilsystemen gewollte Funktionsänderungen realisiert oder ungewollte Funktionsausfälle durch Kammerung der betroffenen Leitungsabschnitte vermeidbar sind. Beispielhaft ist eine derartige Lösung einer mittels Drucköl betätigten Werkstück-Spannvorrichtung in DE 299 03 693 U1 dargestellt.

Allgemein bekannt ist es, über Druckabfälle der Leistungsmedien in der Werkstück-Spannvorrichtung intelligent zu informieren und über die Werkzeugmaschinen-Steuerung zu reagieren, so daß die Drucker zeugungs-Komponenten im Bohr-Fräs-Bearbeitungszentrum zeitweise in Funktion gesetzt sind, bis die Druckdifferenz gegenüber der normativen Druckdimensionierung ausgeglichen ist oder daß eine störungsbedingte Ausschaltung des Bearbeitungssystemserfolgt.

Durch DE 299 03 693 U1 ist weiterhin bekannt, eine Werkstück-Spannvorrichtung mit Werkstückspann-Komponenten intelligent auszustatten, in denen neben den Schnittstellen zur Überleitung von Drucköl und Druckluft, als Leistungsmedien, vom Bohr-Fräs-Bearbeitungszentrum zur Werkstück-Spannvorrichtung auch Schnittstellen elektrischer Energie- und für Informationsdaten-Übertragung über die Spann- und Lage-Zustände der Komponenten zur Werkzeugmaschinen-Steuerung angeordnet sind. Notwendig ist bei drehbeweglichen Stellungsänderungen der Werkstück-Spannvorrichtung eine begrenzte lineare Relativbewegung, um die Kupplungshälften durch manuelles oder mechanisches Zueinander- oder Auseinanderbewegen zwischenzeitlich trennen zu können, da Kabelverdrehungen und -verschlingungen zu vermeiden sind.

Neben einer aufwendig manuell zu regelnden Relativbewegung der Werkstück-Spannvorrichtung ist durch ein manuelles oder mechanisches Zueinander- oder Auseinanderbewegen der Kupplungshälften als kontinuierlich gleichbleibende achsgleiche Bewegungsabläufe die Anwendungsdauer der Kupplungen verschleißbedingt begrenzt. Die Anwendung dieser Lösung ist damit für ständige dreh- oder linearbewegliche Stellungsänderungen wenig geeignet.

Gegenstand von DE 100 59 193 ist, daß zur Realisierung von drahtlosen Energie- und Informationsschnittstellen zwischen beweglichen Werkstückträger- und Spann-Modulen einerseits und der Werkstück-Spannvorrichtung sowie dem Bohr-Fräs-Bearbeitungssystem, andererseits, Drucköl und Druckluft als Energieträger genutzt, und die Druckölzu- und -abführung sowie die Druckluft-Zuführung über Rohrleitungen übertragen wird. Auf den beweglichen Werkstückträger- und Spann-Modulen erfolgt eine Wandlung der Druckluft in Elektroenergie. Zu diesem Zweck ist auf diesen Komponenten ein autarkes Schwachstrom-Energieversor-gungssystem ausgebildet, welches jeweils aus einem Energiewandler, zur Wandlung von Druckluft in Elek-troenergie, aus einem Elektroenergie-Puffer, als nachladbares Batteriesystem strukturiert, und aus Elektro-Versorgungsleitungen besteht
Die mit Hilfe dieser Energie ermittelten und übertragbaren Funktions- und Zustandssignale von den Positionier- und Spannelementen sind an der Energie-Schnittstelle drahtlos durch eine Infrarot-Informatiöns-Schnittstelle über eine Signalübertragungsleitung, zur Steuerung des stationären Bearbeitungssystems hin, intelligent übertragbar.

Ergänzend zu DE 100 59 193 wurde in DE 101 58 365 vorgeschlagen, in jedem der Werkstückspann-Module, die aus einem Modulgehäuse und einer beweglich oder fest gelagerten Spannpalette bestehen, alle für das Lösen, für die Schwenkung und für die Begrenzung sowie Positionierung der Schwenkung der Spannpalette benötigten Hydraulik-Antriebe und der Antrieb für die hydraulische Werkstückspannung und - entspannung aufgenommen sind.
Über gezweigte und zusammengeführte Drucköl- und Druckluft-Leitungen sind Informationspakete über festgestellte Zustands-Änderungen an den Antrieben digital und elektrisch ermittelte analoge Zustandsmessungen drahtlos mittels Lichtwellen an einer Informationsschnittstelle übertragbar.

In den oben genannten Stand der Technik sind als Medien für die Übermittlung intelligenter Zustands- und Funktionsinformationen von den Werkstückträger- und Spann-Modulen sowie Komponenten und gespannten Werkstücken der Werkstück-Spannvorrichtung, über Schnittstellen, zur Werkzeugmaschinen-Steuerung des Bohr-Fräs-Bearbeitungszentrums hin,
- der gegenüber normativen Druckdimensionierungen eingetretene Druckabfall oder eine Drucksteigerung des Leistungsmediums, insbesondere Drucköl, und
- die ergänzend angeordneten elektroenergetische infrarot- oder lichtwellengetragenen Informationsschnittstellen
benannt.
Eine Prozeßautomatisierung, hohe Anwendungsgenauigkeit und Funktions- sowie Arbeitssicherheit auf der Grundlage von gesicherten Informationen, die mit gleichbleibenden Dimensionierungen, in einem engen Toleranzbereich und in konstanter Wiederholbarkeit störungsfrei an die Werkzeugmaschinen-Steuerung übertragbar sind, erfordern qualitativ hochwertige Ausstattungen der Intelligenten Werkstück-Spannvorrichtungen und aufwendige Prozeßvorbereitungen sowie Erprobungen.

Der im Patentanspruch 1 angegebenen Erfindung liegt das Problem zugrunde, für einen automatisierbaren Prozeß einer spanenden Serienfertigung von Werkstücken auf Bohr-Fräs-Bearbeitungszentren eine mit einfachen Mitteln realisierbare intelligente Informationsverbindung der Werkstückspannung mit der Werkzeugmaschinen-Steuerung vorzuschlagen.

Das Problem wird durch die im Patentanspruch 1 aufgeführten Merkmale gelöst.

Die Informationen werden aus dem Durchfluß der Druckflüssigkeit in den Druckflüssigkeits-Leitungen der Systemverbindung von Werkstück-Spannvorrichtung und Werkzeugmaschinen gewonnen.

In mindestens einer Druckflüssigkeitsleitung ist ein Volumenmeß-Sensor angeordnet, der über eine Signal-Übertragungsleitung mit der Werkzeugmaschinen-Steuerung verbunden ist.

In den in Zeitintervallen veränderten Positionen der bewegten oder stehenden Werkstückträger- und Spann-Module und Komponenten werden
- während deren Bewegung,
   das Vorhandensein und die Richtung des Durchflusses
- am Ende der Bewegung,
   die Menge, im Vergleich zu einer normativen Dimensionierung der Menge des Durchflusses, als Normal- oder Fehlfunktion,
- zum Wiederbeginn der umgekehrt gerichteten Bewegung,
   das Vorhandensein und die Richtung des Durchflusses und
- bei positionsunabhängigen Stellungen, zeitlich unbegrenzt anhaltenden Durchfluß, als Störfunktion und ungültige Information
festgestellt.

Weitere Ausgestaltungen der Erfindung sind in den Patentansprüchen 2 und 3 angegeben.

Die Bewegungen der Werkstückträger- und Spann-Module sind linear wie auch kreisbogenförmig gerichtet.

Die Druckflüssigkeits-Menge ist mittels einer Vakuumpumpe luftfrei befüllt.

Die mit der Erfindung erreichbaren Vorteile bestehen insbesondere in einer mit einfachen Mitteln, kostengünstig anwendungs- und funktionsgenauen gesicherten Informationen, mit gleichbleibender Dimensionierung in einem engen Toleranzbereich befindlich. Durch die luftfreie Befüllung der Druckflüssigkeits-Menge ist eine konstante Wiederholbarkeit der Informationen gewährleistet.

Die Erfindung ist in einem Ausführungsbeispiel in den Figuren vereinfacht dargestellt und wird im folgenden Teil der Beschreibung näher erläutert:
- Fig. 1: eine Vorderansicht
- Fig. 2: eine Seitenansicht der Ansicht nach Fig. 1
- Fig. 3: eine Schnittdarstellung einer Komponente für die Werkstückspannung.

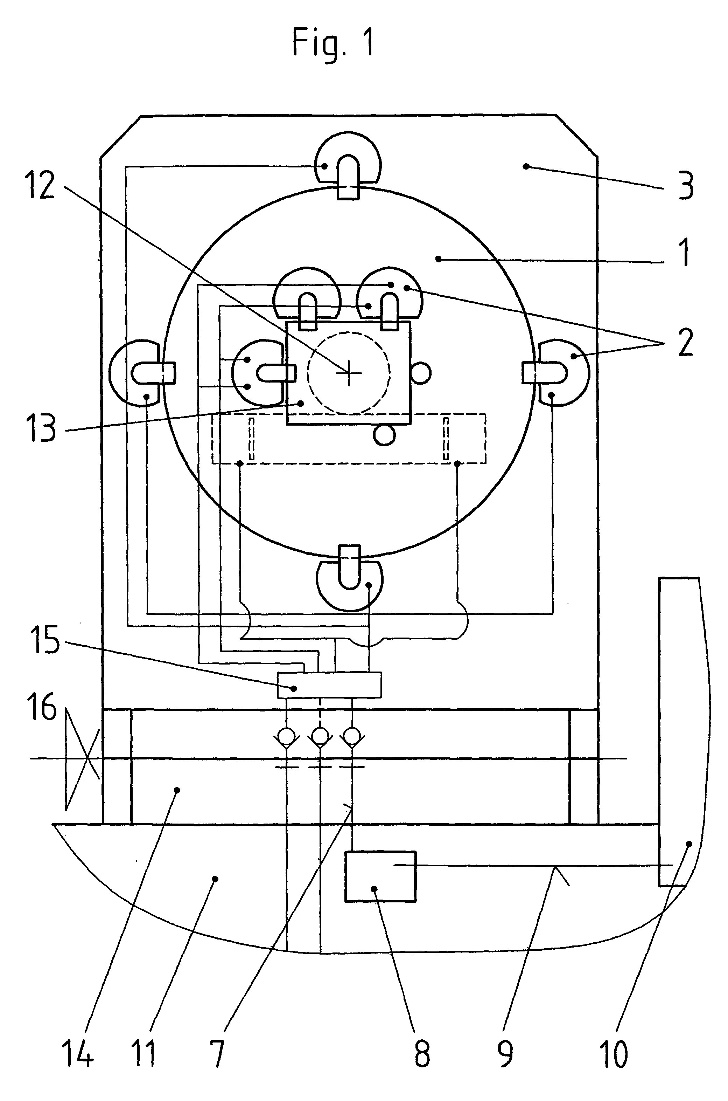

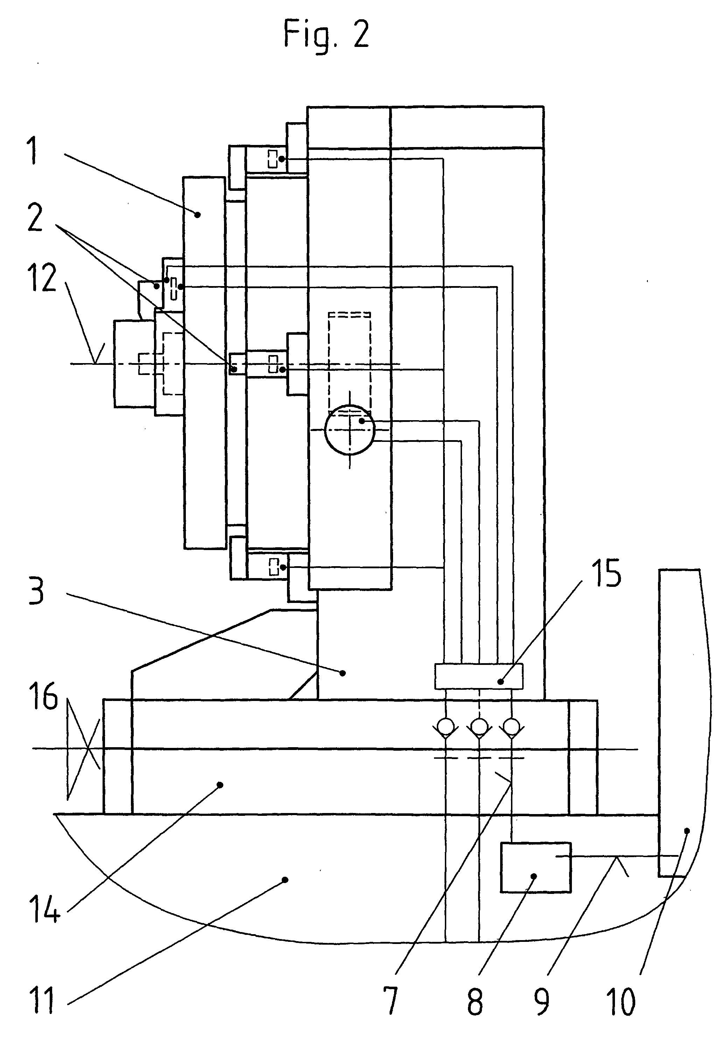

Die in Fig. 1 und Fig. 2 dargestellte Intelligente Werkstück-Spannvorrichtung besteht im wesentlichen aus dem Aufspannkörper 3, wobei an einer seiner senkrechten Peripherieflächen ein Werkstückträger- und Spann-Modul 1 angeordnet ist. Das Werkstückspann-Modul 1 besteht aus einem am Aufspannkörper 3, fest angeordneten Modulgehäuse und einer plananliegenden schwenkbeweglichen oder fest mittengenau zentriert, gelagerten Schwenkpalette. Die Schwenkpalette ist in der verschwenkten eingestellten Lage mit tels vier, als druckflüssigkeitsbetätigten Klemmhaken ausgebildete, Komponenten 2 fest am Motorengehäuse arretiert oder, für die Schwenkbewegung freigegeben, gelöst. Das Werkstück 13 ist, auf dem, als Schwenkpalette ausgebildeten, Werkstückträger- und Spann-Modul 1 aufliegend, positioniert um mittels drei, als schwenkbare, beidseitig gerichtete, druckflüssigkeitsbetätigte Schwenkspann-Baugruppen ausgebildete, Komponenten 2 gespannt. In dem Werkstückträger- und Spann-Modul 1 ist ein, beidseitig geruchtet, linear endlich beweglicher, druckmittelbetätigter Linearantrieb angeordnet, mit dem die Schwenkpaletten kreisbogenförmig, um die Schwenkachse 12 des Modulgehäuses am Aufspannkörper 3 verankert, gerichtet ist.

Alle Komponenten 2 und der Linearantrieb sind über Druckflüssigkeits-Leitungen, am und im Aufspannkörper 3 angeordnet, gezweigt und zusammengeführt, über die Schalt- und Verteilereinheit 15, über die Maschinenpalette 14, mit den Druckflüssigkeits-Leitungen 7 in der Werkzeugmaschine 11 verbunden. In einer Druckflüssigkeits-Leitung 7 ist, in der Werkzeugmaschine 11 positioniert, ein Volumenmeß-Sensor 8 angeordnet. Der Volumenmeß-Sensor 8 ist, bezüglich der Zustandsinformationen der durchfließenden Druckflüssigkeit, über die Signalübertragungs-Leitung 9 mit der Werkzeugmaschinen-Steuerung 10 der Werkzeugmaschine 11 intelligent informationsverbunden.
Die Werkstück-Spannvorrichtung bildet über die Grund- und Standfläche des Aufspannkörpers 3 mit der Auflagefläche der Maschinenpalette 14 der Werkzeugmaschine 11 die Schnittstellen 16. Die Endstellen der drei Druckflüssigkeitsleitungen 7 am Aufspannkörper 3 und an der Maschinenpalette 14 sind mittels Kupplungsventilen bei Wechsel der Spannvorrichtung druckdicht verschlossen. und gegen auslaufende Druckflüssigkeit gesichert.

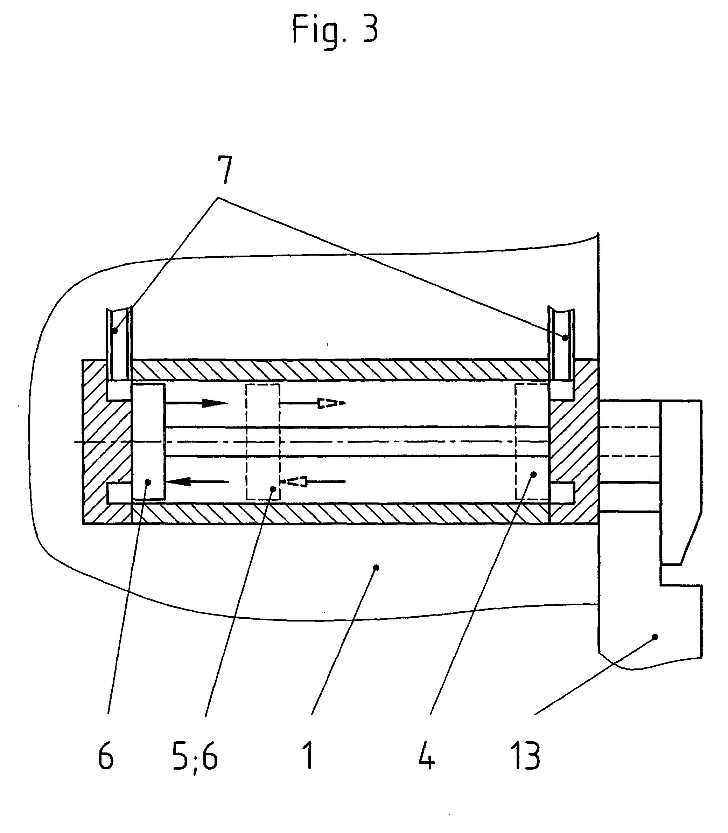

In Fig. 3 ist beispielhaft für alle Komponenten 2 eine der drei Komponenten für die Spannung des Werkstückes 13 auf dem Werkstückträger- und Spann-Modul 1 dargestellt. Er besteht aus einem schwenkbaren Spanneisen, welches endlich linear, wechselseitig gerichtet, bewegt wird und mittels einem druckfüssigkeitsbetriebenen Kolben 4, 5, 6 in Spannstellung gebracht, gespannt, entspannt und in Endspannstellung gebracht wird. Die sich wiederholenden Funktionen laufen in zweckbestimmten Zeitinervallen ab. Über die Druckflüssigkeits-Leitungen 7 fließt dabei abwechselnd, und entgegengerichtet, die Druckflüssigkeit zu und ab.

Am Volumenmeß-Sensor 8 werden, abgeleitet aus der jeweiligen Position des Kolbens der Komponente 2, dabei folgende Informationen festgestellt:
Während der Bewegung des Kolbens von der Bewegungsausgangsposition 4, = Lösestellung des Spanneisens, hin zur Bewegungsend- sowie Bewegungsumkehr-Position 5, als Zwischenposition = Spannstellung des Spanneisens am Werkstück 13, ist das Vorhandensein und die Richtung des Druckflüssigkeits-Durchflusses festgestellt. Ist kein Werkstück 13 vorhanden, ist die Bewegungsend- sowie Bewegungsumkehr-Position 6 die Anlagestelle des Kolbens am Zylinder-Deckel.

In der Zwischenposition 5 als/oder Bewegungsend- sowie Bewegungsumkehr-Position 6 des Kolbens ist der Durchfluß-Stillstand und die Menge der vorher durchgeflossenen Druckflüssigkeit im Vergleich zu einer normativen Druckflüssigkeits-Menge festgestellt. Die durch das nicht vorhandene Werkstück 13 bedingte geänderte Bewegungsend- und Bewegungsumkehr-Position 6 wird als andere Menge der Druckflüssigkeit als Fehler-Information festgestellt

. In der Bewegungsausgangsposition 4 des Kolbens ist die Druckflüssigkeit, als in die Gegenrichtung fließend, festgestellt.

In einer von den Positionen 4, 5, 6 unabhängigen Position des Kolbens ist bei zeitlich unbegrenzt andauernden Durchfluß der Druckflüssigkeit als eine Störfunktion oder als eine ungültige Information festgestellt

Die im Volumenmeß-Sensor 8 festgestellten Informationen über das Vorhandensein, die Richtung, die Menge und die zeitliche Begrenzt- oder Unbegrenztheit des Durchflusses der Druckflüssigkeit wird über die Signalübertragungsleitung 9 an die Werkzeugmaschinensteuerung geleitet.

### Bezugszeichenliste

- 1: Werkstückträger- und Spann-Modul
- 2: Komponenten an Werkstückträger- und Spann-Modul 1
- 3: Aufspannkörper
- 4: Bewegungsausgangsposition
- 5: Zwischenposition
- 6: Bewegungsend- sowie Bewegungsumkehr-Position
- 7: Druckflüssigkeits-Leitung
- 8: Volumenmeß-Sensor
- 9: Signalübertragungsleitung
- 10: Werkzeugmaschinen-Steuerung
- 11: Werkzeugmaschine
- 12: Schwenkachse des Aufspannkörpers 3
- 13: Werkstück
- 14: Maschinenpalette an Werkzeugmaschine 11
- 15: Schalt- und Verteiler-Einheit
- 16: Schnittstelle

## Patentansprüche

1. Intelligente Werkstück-Spannvorrichtung, mit einer Werkzeugmaschine über eine Maschinenpalette Schnittstellen bildend, bestehend aus einem Aufspannkörper, an dessen Peripherieflächen Werkstückträger- und Spann-Module sowie Komponenten für die wiederholgenaue Lagebestimmung und die Spannung der Werkstücke und die zu spannenden Werkstücke selbst, mittels in einem geschlossenen System befindlicher Druckflüssigkeit, alternativ wechselnd und wiederholend entgegengerichtet bewegt, justiert, arretiert, gelöst sowie ge- und entspannt sind,
**dadurch gekennzeichnet,**
**daß** in mindestens einer Druckflüssigkeitsleitung (7) ein Volumenmeß-Sensor (8) angeordnet ist, der über eine Signalübertragungsleitung (9) mit der Werkzeugmaschinen-Steuerung (10) einer Werkzeugmaschine (11) intelligent informationsverbunden ist, wobei über
in Zeitinterwallen veränderten Positionen der bewegten oder stehenden Werkstückträger- und Spann-Module (1) und Komponenten (2) zwischen einer Bewegungsausgangsposition (4) und einer Bewegungsend- sowie Bewegungsumkehr-Position (6) oder einer Zwischenposition (5) das Vorhandensein und die Richtung eines Druckflüssigkeits-Durchflusses festgestellt und
in der Bewegungsend- sowie Bewegungsumkehr-Position (6), bei Durchfluß-Stillstand der Druckflüssigkeit, die Menge der durchgeflossenen Druckflüssigkeit festgestellt und gegenüber einer normativen Druckflüssigkeits-Menge konstant bleibend, eine Normalfunktion festgestellt ist, oder geändert, eine Fehlbewegung bestimmter Werkstückträger- und Spann-Module (1) oder Komponenten (2) festgestellt ist und
in einer Bewegungsausgangsposition (4) die Druckflüssigkeit, als in die Gegenrichtung fließend, festgestellt ist und
in einer positionsunabhängigen Situation ein zeitlich unbegrenzt andauernder Durchfluß der Druckflüssigkeit als eine Störfunktion oder als eine ungültige Information festgestellt ist.

2. Intelligente Werkstück-Spannvorrichtung nach Patentanspruch 1
**dadurch gekennzeichnet,**
**daß** die Bewegung der Werkstückträger- und Spann-Module (1) endlich ist und linear oder kreisbogenförmig, um eine konstante Schwenkachse (12) am Aufspannkörper (3) verlaufend, gerichtet ist.

3. Intelligente Werkstück-Spannvorrichtung nach Patentanspruch 1
**dadurch gekennzeichnet,**
**daß** die in eine der Druckflüssigkeits-Leitungen (7) eingebrachte Druckflüssigkeits-Menge mittels einer Vakuumpumpe luftfrei befüllt ist.

## Claims

1. Intelligent work clamping device forming interfaces with a machine tool via a machine pallet, consisting of a mounting body, at the peripheral surfaces of which work holding and clamping modules as well as components for repeat-accuracy location and clamping of the work pieces and the work pieces to be clamped themselves are moved alternately and repeatedly in opposite direction, adjusted, locked, unlocked, as well as clamped and unclamped,
**characterised in**
**that** a volumetric rate-of-flow meter (8) be arranged in at least one hydraulic duct (7), which is intelligently information-linked with the machine tool control (10) of a machine tool (11) via a signal cable (9), where
the availability and the direction of a pressure liquid flow be defined through position changes within time intervals of the moved or steady work holding and clamping modules (1) and components (2), between an initial position of the motion (4) and an end-of-motion as well as direction reversal position (6) or an intermediate position (5), respectively, and
the quantity of the flowed through pressure liquid be determined in the end-of-motion as well as direction reversal position (6) at a flow stoppage of the pressure liquid, determining a normal function if it remains constant with regard to a standard pressure liquid quantity, or if changed, a faulty motion of determined work holding and clamping modules (1) or components (2), and
pressure liquid be determined flowing into the opposite direction in an initial position of the motion (4), and
an indefinite permanent flow of the pressure liquid be determined as a troubled function or as invalid information in any position other than the above mentioned positions.

2. Intelligent work clamping device as per patent claim 1
**characterised in**
**that** the motion of the work holding and clamping modules (1) be an infinite, straight-line or circular-arc motion running through a constant swivel axis (12) at mounting body (3).

3. Intelligent work clamping device as per patent claim 1
**characterised in**
**that** a pressure liquid quantity charged into one of the hydraulic ducts (7) be air-free filled by means of a vacuum pump.

## Revendications

1. Dispositif intelligent de serrage de pièce formant des interfaces avec une machine-outil par l'intermédiaire d'une palette machine, étant composé d'un corps de montage, aux surfaces périphériques duquel sont déplacés de façon alternative et réitérée en sens opposé, réglés, attachés, débloqués ainsi que serrés et desserrés des modules porte-pièce et de serrage de pièce, ainsi que des composants et assurant une localisation reproductible et le serrage des pièces et des pièces à serrer elles-mêmes, à l'aide d'un liquide sous pression se trouvant dans un système fermé,
**caractérisé en ce que**
un capteur volumétrique (8) est arrangé dans au moins un tuyau à liquide sous pression (7) qui est uni de façon intelligente à base d'informations avec le contrôle (10) d'une machine-outil (11), par l'intermédiaire d'un câble de transmission de signaux (9) et où
la présence et la direction d'un écoulement du liquide sous pression sont déterminées sur la base de positions changeant dans des intervalles de temps des modules mobiles ou fixes de porte-pièce et de serrage de pièce (1) et des composants (2), entre une position initiale du mouvement (4) et une position finale ainsi qu'une position d'inversion du mouvement (6), ou une position intermédiaire (6) et
où la quantité du liquide sous pression écoulée est déterminée dans une position finale du mouvement ainsi que dans une position d'inversion du mouvement (8), au moment de l'écoulement arrêté du liquide sous pression, tout en détectant une fonction normale au cas où cette quantité serait maintenue constante par rapport à une quantité normative de liquide sous pression, ou un faux mouvement de modules déterminés de porte-pièce et de serrage de pièce (1) ou de composants (2) au cas où elle serait changée, et
où le liquide sous pression est détecté comme s'écoulant en sens opposé dans une position initiale du mouvement (4), et
où un écoulement constant lors d'un temps illimité à chaque autre situation indépendent de la position est détecté en tant que fonction de panne et information non valable.

2. Dispositif intelligent de serrage de pièce suivant revendication 1
**caractérisé en ce que**
le mouvement des modules porte-pièce et de serrage de pièce (1) est fini et est dirigé de façon linéaire ou en arc de cercle en passant autour d'un axe pivotant constant (12) au corps de montage (3).

3. Dispositif intelligent de serrage de pièce suivant revendication 1
**caractérisé en ce que**
la quantité de liquide sous pression chargée dans un des tuyaux à liquide sous pression (7) est remplie exempt d'air à l'aide d'une pompe à vide.
